# EUROPEAN PATENT SPECIFICATION

(11) **EP 2 486 499 B1**
(45) Date of publication and mention of the grant of the patent: **29.08.2018**
(21) Application number: 10773441.0
(22) Date of filing: 06.10.2010
(51) Int. Cl.: G06F 17/30, G06Q 30/00, G06Q 30/02, G06Q 30/06

(54) **SYSTEMS AND METHODS FOR MERCHANDISING TRANSACTIONS VIA IMAGE MATCHING IN A CONTENT DELIVERY SYSTEM**
SYSTEME UND VERFAHREN ZUM VERMARKTEN VON TRANSAKTIONEN MITTELS BILDABGLEICH IN EINEM INHALTSBEREITSTELLUNGSSYSTEM
SYSTÈME ET PROCÉDÉ ADAPTÉS POUR COMMERCIALISER DES TRANSACTIONS VIA UNE MISE EN CORRESPONDANCE D'IMAGES DANS UN SYSTÈME DE LIVRAISON DE CONTENU

(30) Priority: 06.10.2009 US 574460
(43) Date of publication of application: 15.08.2012
(73) Proprietor: Qualcomm Incorporated, San Diego, CA 92121-1714 (US)
(72) Inventor: KANNAN, Prasanna, San Diego, CA 92121-1714 (US); CAVENDISH, Dirceu, G., San Diego, CA 92121-1714 (US)
(74) Representative: Dunlop, Hugh Christopher
(86) International application number: PCT/US2010/051675
(87) International publication number: WO 2011/044270

(56) References cited:
- US-A1- 2008 177 640
- US-A1- 2008 226 119
- US-A1- 2009 077 034
- US-B1- 7 240 075

## Description

### BACKGROUND

Digital communication technologies have seen explosive growth over the past few years. This growth has been fueled by new content delivery technologies, including the Internet and new wireless services such as mobile broadcast television. With this new content delivery technologies have come increased consumer demand for audio and video content, as well as new opportunities for marketing products and responding to consumer demand. US 2009/0077034 A1 relates to a personal-ordered multimedia data search service in which a set-top box searches for scene or object information search-requested by a user during watching a movie.

### SUMMARY

The various embodiments provide methods and systems that enable users of still images or video content to select products appearing within the images displayed on a computing device and request information regarding such products. According to the invention, a method comprising the features of claim 1 and a server with the features of claim 13 are proposed. Further embodiments of the invention are defined by the dependent claims.

### BRIEF DESCRIPTION OF THE DRAWINGS

The accompanying drawings, which are incorporated herein and constitute part of this specification, illustrate exemplary embodiments of the invention, and together with the general description given above and the detailed description given below, serve to explain the features of the invention.
FIG. 1 is a communication system block diagram illustrating a communication system suitable for use with various embodiments.
FIG. 2 is a communication system block diagram illustrating an Internet-based communication network suitable for use with various embodiments.
FIG. 3 is a system functionality block diagram of server functionality modules suitable for use with various embodiments.
FIGs. 4A and 4B are process flow diagrams of an embodiment method for enabling mobile TV broadcast users to identify products for purchase within broadcast content.
FIG. 5 is a message flow diagram of example messages that may be passed among various system components in the embodiment method illustrated in FIGs. 4A and 4B.
FIG. 6 is a process flow diagram of an embodiment method for implementation within a computing device for enabling users to inquire about products of interest seen in broadcast content.
FIG. 7 is a process flow diagram of an embodiment method for implementation within a computing device for enabling users to complete a purchase based on product information received in response to a product query.
FIG. 8 is a process flow diagram of an embodiment method for processing a product query message received from a computing device and generating a product information message to the mobile device.
FIG. 9 is a process flow diagram of another embodiment method for processing a product query message received from a computing device and generating a product information message to the mobile device.
FIG. 10 is a process flow diagram of another embodiment method for processing a product query message received from a mobile device and generating a product information message to the mobile device.
FIG. 11 is a process flow diagram of another embodiment method for processing a product query message received from a computing device and generating a product information message to the mobile device.
FIG. 12 is a process flow diagram of an embodiment method for generating a coupon in response to a coupon request message received from a computing device.
FIG. 13 is a process flow diagram of an embodiment method for completing a purchase transaction according to an embodiment.
FIG. 14 is a process flow diagram of an embodiment method for reminding a user of a product of interest based upon geographic proximity to a source for such product.
FIG. 15 is a component block diagram of a mobile device suitable for use with various embodiments.
FIG. 16 is a component block diagram of a personal computer suitable for use with various embodiments.
FIG. 17 is a component block diagram of a server suitable for use with various embodiments.

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

The word "exemplary" is used herein to mean "serving as an example, instance, or illustration." Any implementation described herein as "exemplary" is not necessarily to be construed as preferred or advantageous over other implementations.

As used herein, the term "computing device" refers generally to any device including a processor that may be programmed and configured to accomplish any of the various embodiments. As used herein, the terms "mobile device" and "handheld device" refer to any one or all of cellular telephones, personal data assistants (PDA's), palm-top computers, wireless electronic mail receivers (e.g., the Blackberry® and Treo® devices), multimedia Internet enabled cellular telephones (e.g., the Blackberry Storm®), Global Positioning System (GPS) receivers, wireless gaming controllers, and similar computing devices which include a programmable processor and memory and receiver circuitry for receiving and processing still and video image content. In an embodiment a mobile device includes receiver circuitry for receiving and processing mobile broadcast television services.

The term "unicast network" is used herein to refer to communication networks which transmit data to a single destination. Examples of a unicast network include WiFi and cellular data communication networks. Examples of unicast transmissions include simple message service (SMS), multimedia message service (MMS), and electronic mail messages as may be carried via a cellular telephone data communication network.

The word "broadcast" is used herein to mean the transmission of data (information packets) so that it can be received by a large number of receiving devices. Examples of a broadcast message are mobile television (TV) broadcast transmissions as well as digital television, IP multicast programs, cable television cablecasts and satellite television broadcasts. Although broadcast content delivery system is a type of content delivery system, the embodiments are not limited to broadcast content delivery systems as the embodiments may also be implemented with stored video images, such as stored in a digital video disc (DVD), a digital television storage device (e.g., Tivo®) or a web server accessed via the Internet (e.g., youtube.com). The embodiments may further be implemented with video images shot by the user, such as video shot on a mobile device like a cellular telephone.

The various embodiments utilize a number of process modules, software programs or analysis engines that may be implemented within one or more server computers to accomplish the embodiment methods. While such process modules, software programs or analysis engines may be implemented in a variety of architectures, including as a single processing module, for ease of description herein reference is made to separate processing modules whose names and functions defined in the following paragraphs.

As used herein, "Transaction Server" refers to a server or network of servers to which receive product query messages, process included or referenced images to identify products, and accomplish other product recommendation processes described herein. A Transaction Server may include a "Transaction Gateway" which may be a module that facilitates transaction communications with computing devices via a network, such as the Internet.

As used herein, "Image Selection" refers to a act of an end user (e.g., a video consumer) selecting a portion of an image (e.g., within a frame of video content) that contains an object of interest, and "Image Selection Information" refers to the selected portion of the image (i.e., image data such as pixel values) or to information about the Image Selection that can be used to obtain the selected portion of the image from memory or an accessible database (e.g., a file identifier for the image or a frame number of the video and image coordinates within the frame). The Image Selection Information is transmitted to a Transaction Server in a Product Query message so the Transaction Server either receives the selected portion of the image or can obtain the Image Selection from memory or an accessible database.

As used herein, "Annotation Information" refers to optional information that an end user could give to qualify the object of interest that is sent along with or in addition to the Image Selection Information in a Product Query message. Annotation Information may be in the form of text inputs, a voice memo, menu selections, etc.

As used herein, "User Profile" refers to information about a particular end user, such as age, gender, salary range, purchase history, personal preferences, etc. User Profile information may be provided by a user and/or observed by a computing device or the Transaction Server based upon the user's activities (e.g., purchases, Product Queries, mobile device uses, etc.). The User Profile may also include information about the end user's computing device or mobile device, such as delivery or display capabilities, music download accounts, etc., that may be relevant to recommending products for purchase.

As used herein, "Product Query" messages are messages that convey Image Selection Information along with Annotation Information to the Transaction Server.

As used herein, "Product Correlation Engine" refers to a process module or software module implemented on a server, such as within the Transaction Server which matches objects of interest to products from merchandisers' databases. As used herein, "Product Correlation" refers to the methods implemented by the Product Correlation Engine's based upon information received in a Product Query.

As used herein, "Recommendation Engine" refers to a process module or software module implemented on a server, such as within the Transaction Server, which recommends products to an end user based on a Product Query, a User Profile or other information.

As used herein, "Product Information message" refers to a message produced by the processing of the Product Correlation Engine and Recommendation Engine that contains product pricing/coupon information for products that match the Product Query and User Profile. The Product Information message need not always be sent in response to a Product Query, and may be generated at a later time. For example similar to advertisements, a Product Information may be "pushed" to end users based on information in a User Profile, such as a previous Product Query or purchase transaction. For example, if a user requests a black leather jacket in a Purchase Query including Image Selection Information selected from the Terminator movie and in response is sent Product Information message including jacket information on one day, another Product Information message may be sent the next day including information about sunglasses featured in Terminator movie.

Still images and video programs are being delivered to consumers in a wide variety of formats now. Consumers now receive visual content from satellite and cable television networks, broadcast digital television networks, and the Internet. Noteworthy is the recent develop of mobile TV broadcast services which have begun delivering video content to mobile users. A number of different mobile TV broadcast services and broadcast standards are available or contemplated in the future, all of which may implement and benefit from the various embodiments. Such services and standards include Open Mobile Alliance Mobile Broadcast Services Enabler Suite (OMA BCAST), MediaFLO, Digital Video Broadcast IP Datacasting (DVB-IPDC), and China Multimedia Mobile Broadcasting (CMMB).

Mobile TV users and mobile Internet users are different from the conventional home television audience in that they use viewing devices (i.e., mobile devices) that they carry with them which received mobile TV broadcast services or Internet multicast program and can communicate via unicast messages. Additionally, mobile devices can be personalized to users since in the majority of instances only one person uses a mobile device. Still further, mobile devices now typically include video cameras that enable users to film video images, such as images of products of interest to them. Typically, users carry their mobile devices with them everywhere, including while shopping. Thus, the mobility and access to the Internet and mobile TV broadcasting services mean that mobile devices may be highly valuable marketing and electronic transaction tools.

The various embodiments enable end users to select image portions or image data that correlates with merchandise displayed within broadcast programs, multicast programs, stored video images (e.g., from a DVD, Blu-ray disc player, or Tivo®) or a user video, and initiate order transactions for such products or related merchandise on their computing device, such as a personal computer or mobile devices. A client application running on the end user's computing device enables the user to identify products of interest by designating a portion of a displayed image containing a product or products of interest. The user may designate the selected portion of the still or video image using a pointing device, such as by drawing a circle around the image portion with a computer mouse or with a finger tracing a circle on a touchscreen display. The selected portion of the image including the object of interest may be packaged as Image Selection Information within a Product Query message that the mobile device transmits to a Transaction Server. Instead of transmitting the image data itself, the Image Selection Information within the Product Query may include information such as a frame number or image file name and coordinates within the image that define the selected portion so that the Transaction Server can obtain the image from an accessible database and determine the selected portion. The Product Query message forwarding the Image Selection Information may also include additional information ("Annotation Information"), such as voice notes or typed comments from the user regarding the product of interest. Such a Product Query message may be received in a Transaction Server where the message is parsed to obtain the Image Selection Information, Annotation Information, and other additional information, such as an identifier (ID) of the mobile device. The Image Selection Information may be processed by a Product Correlation engine which may be a software module within the Transaction Server or another server that is configured to process images in order to recognize particular product characteristics, such as shape, color and configuration. Image objects identified within the image selection may be compared to a database of merchandise to determine if the object(s) in the image selection matches or corresponds to available merchandise. If a match is found, information regarding the make, model, source, cost, and other purchasing details for the product may be obtained from the merchandise database, and assembled into a Product Information message that is transmitted to the mobile device. The Product Information message may also include other related products beyond those that match, such as products which a Recommendation Engine predicts will be of interest to the end user based upon the matched product and information in the user's User Profile. If a direct match between the image selection and a product available in the marketplace is not found, the image selection may correspond to a product such as a later or replacement model of the imaged product, an equivalent competitor's product, or a replica of the imaged product. Therefore, if a product match or correspondence is not found, the Recommendation Engine may process the recognized image object(s) along with any received Annotation Information, User Profile information about the user and the mobile device, and other information to generate a recommendation of alternative merchandise that might be of interest to the user. As in the case of a matched product, recommended alternative merchandise information may be assembled into a Product Information message that is transmitted to the end user's computing device.

When a computing device receives a Product Information message, a client application running on the device may parse the message to obtain information regarding the selected product and/or recommended alternative products, and generate a user interface display to enable the user to initiate a purchase transaction. This user interface display may be positioned outside the video or image content portion of the display to avoid interrupting the user's video content consumption. If a user decides to purchase or order any recommended product, the transaction may be promptly accomplished using a variety of electronic transaction methods. For example, when the user has transmitted a Product Query message from a mobile device, that device may place a data call to an Internet connection and access a merchant server to purchase the selected product online. As another example, the user's computing device may connect to a merchant server or Transaction Server to receive a coupon towards purchase of the product at a merchant's "brick and mortar" storefront. As a third example, information regarding the location of stores where the recommended product(s) can be purchased may be stored within a geographic information services (GIS) application so that when the user is in the vicinity of such a store the user's mobile device can alert the user and provide driving or walking directions. Regardless of the manner in which a transaction is completed, the user's computing device may report information to the Transaction Server or the merchant that links the transaction to the Product Information message and/or the Product Query message. Products within image selections provided in Product Query messages may be recognized using a variety of techniques, including for example image recognition algorithms, matching image information to product placement information supplied by content providers, and humans viewing the images and recognizing products manually.

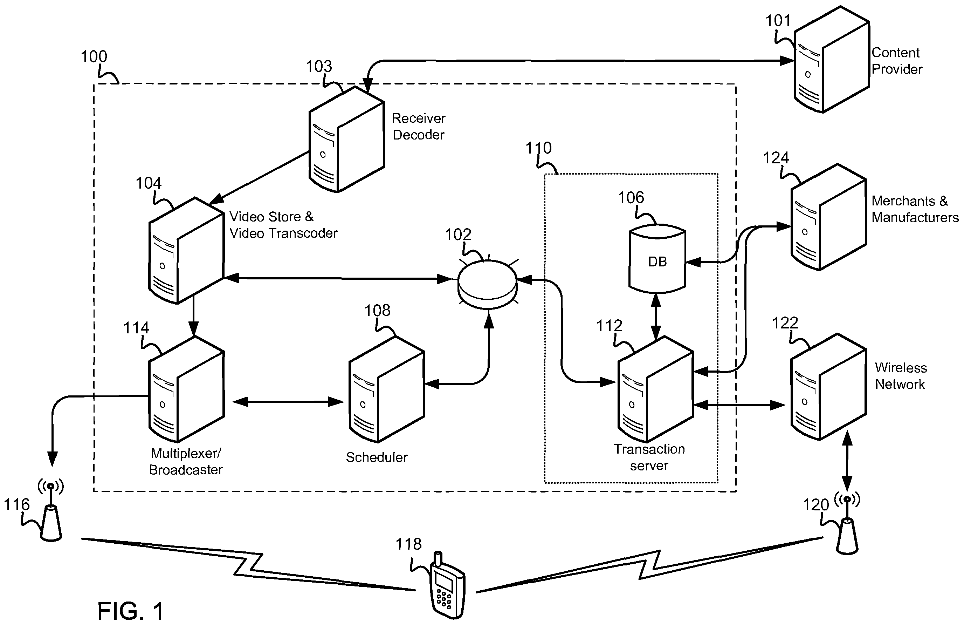

An example communication system including a mobile TV broadcast network 100 suitable for use with the various embodiments is illustrated in FIG. 1. While the various embodiments are not limited to a mobile broadcast television content delivery system, the mobile broadcast TV communication system represents a preferred embodiment implementation and includes system components that are representative of components included in other types of content delivery systems. A mobile TV broadcast network 100 may receive content for broadcast from one or more content providers 101 via a network, such as the Internet, in a receiver decoder server 103. Received content may be processed by a transcoder 104 that places the received content in a format that can be broadcast to mobile devices. Trans-coded content may then be passed to a broadcaster 114 which places the broadcast content into multiplex that broadcast transmission signals which are broadcast by broadcast sites 116. A scheduler server 108 within the mobile TV broadcast network 100 may coordinate the delivery of content to the broadcaster 114 as well as generate program schedule information that are broadcast to mobile devices in an overhead portion of broadcast transmissions. Communication among the various components within the mobile TV broadcast network 100 may be accomplished via a local area network 102.

Within or coupled to the mobile TV broadcast network 100 may be a transaction module 110, which may be coupled to other components within the broadcast network 100 via a local area network 102. The purchase transaction module 110 may include a Transaction Server 112 and a merchandise database 106. The Transaction Server 112 may be coupled via a network or the Internet to a wireless network provider 122 in order to receive unicast messages from mobile devices 118. The Transaction Server 112 may also be coupled to product manufacturers and merchants 124 via a network or the Internet in order to receive information regarding available merchandise, track transactions related to the user Product Queries, complete transactions conducted through the Transaction Server 112, and inform merchants 124 of user interests in various products. Information regarding merchandise available for purchase, and other merchandise-related information necessary to support the functionality of the Transaction Server 112 may be stored within a merchandise database 106. Merchants and manufacturers 124 may also be able to store merchandise information in the merchandise database 106.

While FIG. 1 shows the transaction module 110, including the Transaction Server 112 and merchandise database 106 as being within the mobile TV broadcast network 100, these components may be located outside the broadcaster's network, including being operated by third parties. Further, the merchandise database 106 may be located remotely, such as within a merchant server, and may comprise a number of databases, such as merchandise databases of a number of different merchants subscribing to a transaction service. Further the Transaction Server 112 may be accessible via the Internet and configured to receive Product Queries from any type of computing device, and thus need not be limited to responding to Product Queries received from mobile devices 118.

In operation, still and video image content is broadcast by the mobile TV broadcast network 100 via broadcast sites 116 and received by mobile devices 118. Users can use their mobile devices 118 to view selected broadcast programs. When a user sees an object of interest within a broadcast program, the user may select the portion of a video image containing the object of interest, such as by tracing a circle around it with a fingertip on a touchscreen display. A client application operating in a processor within the mobile device 118 may use the indicated portion of the video image to generate a Product Query message. The Product Query message may be transmitted via a unicast network, such as a wireless data network 122, to the Transaction Server 112. In such a transmission, wireless data messages from the mobile device 118 may be received by a wireless node antenna 120 and forwarded by the wireless data network 122 to another network, such as the Internet, to the Transaction Server 112. The Product Query message from a mobile device 118 to the Transaction Server 112 may be relayed using well-known communication methods and systems, such as cellular data networks and wireless wide area networks (e.g., WiFi), as well as wired network communications, such as the Internet.

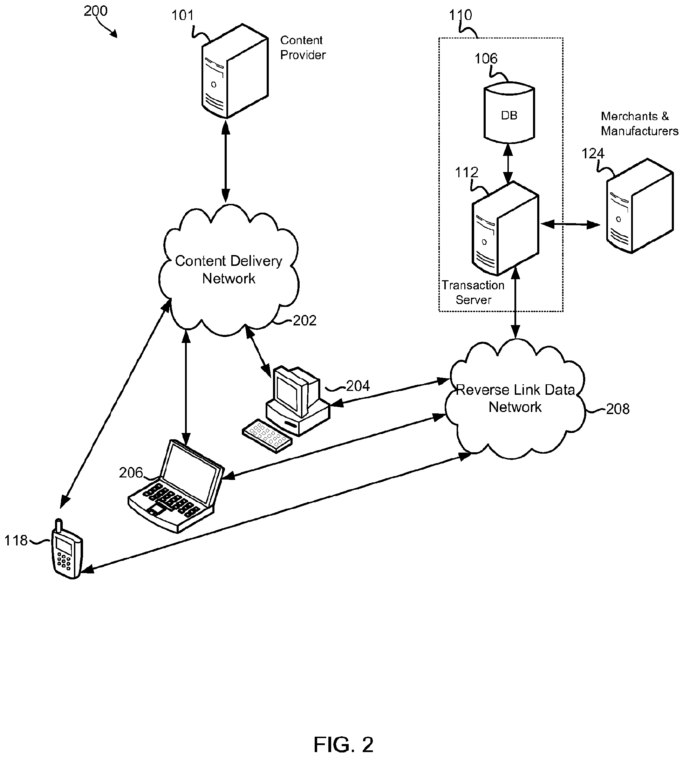

The various embodiments may also be used in connection with non-broadcast content, such as unicast and multicast still and video image content available via the Internet as illustrated in FIG. 2 which shows communication system 200. Content providers 101 may distribute video content via a Content Delivery Network 202. The Content Delivery Network may be unicast wireless, broadcast wireless, Internet, cable TV, Satellite TV or terrestrial TV networks. Further (though not shown separately), content providers 101 may distribute still and video image content via tangible storage products, such as DVD's and Blu-ray discs that users can purchase or rent and use in their computing devices 204, 206. Further, content delivered by conventional television signals (as well as cable and satellite) may be recorded and replayed using digital video recorders, such as Tivo® devices. Users may view such content on content consumption devices like mobile devices 118, personal computers (204, 206) or televisions (not shown) . If users indicate a portion of a video image to be of interest, such as by using a pointing device like a computer mouse or touchscreen display, their computing device 118, 204, 206 may generate a Product Query message that may be transmitted to a transaction module 110 via the Reverse Link Data Network 208. The Reverse Link Data Network may be a wired network (e.g., DSL or cable) or wireless network (e.g., 3G or WiFi) that offers Internet capability. In certain implementations the Content Delivery Network and the Reverse Link Data Network may be the same network.

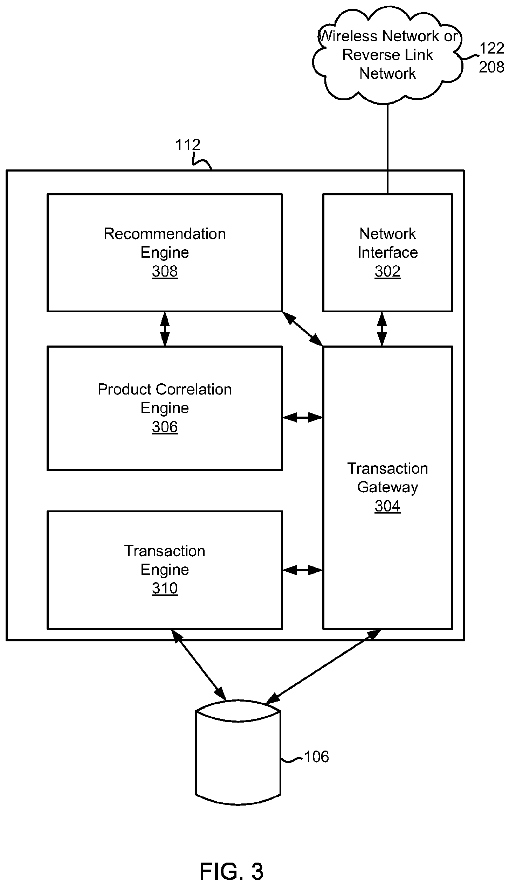

FIG. 3 illustrates functional components that may be implemented within one or more servers functioning as the Transaction Server 112. As described above, a Transaction Server 112 may be coupled to a merchandise database 106 and to Wireless Network (122) or Reverse Link Data Network (208). The Transaction Server 112 may include a network interface 302 including circuitry configured to effect communications with external networks 122, 208. A transaction gateway module 304 may be included within the software operating on the Transaction Server 112 to coordinate the various transaction functions, including those of the various embodiments described herein. Also included within the functionality of the Transaction Server 112 may be a Product Correlation Engine 306. The Product Correlation Engine 306 may include software processes that can receive an image portion and infer information regarding products and merchandise included within such an image. The Transaction Server 112 may also include a Recommendation Engine 308 functionality. Such a Recommendation Engine 308 may include software processes for identifying products based on a User Profile (e.g., age, gender, income, past product purchases, etc.). The Recommendation Engine 308 also identities alternative merchandise which may appeal to a user based upon information in a Product Query message, as well as other relevant information. The Transaction Server 112 may also include a transaction engine 310 to enable or support electronic purchase transactions by computing device users.

The functional components illustrated in FIG. 3 may be implemented in software within a single Transaction Server 112 or within multiple servers linked together by a local or wide area network or inter-server data connections. For ease of reference, the various embodiments are described with reference to a single Transaction Server 112; however, references to a single Transaction Server should not be construed as limiting the scope of the claims to implementations in which all transaction functionality is included within a single server device.

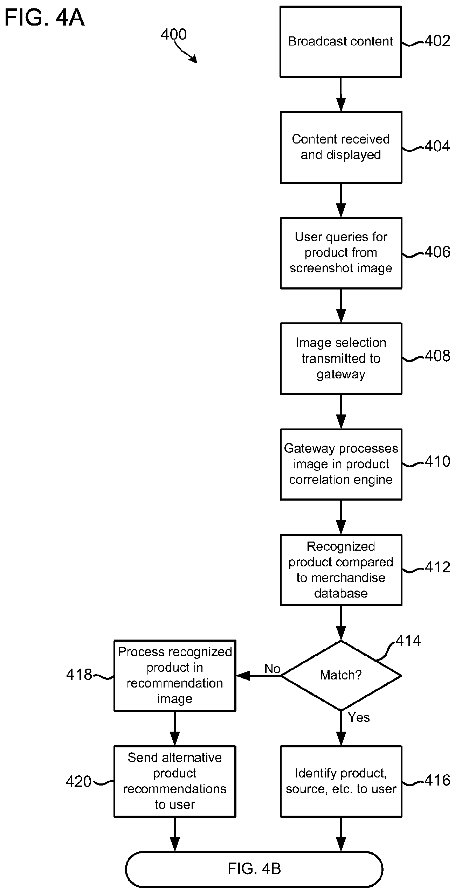

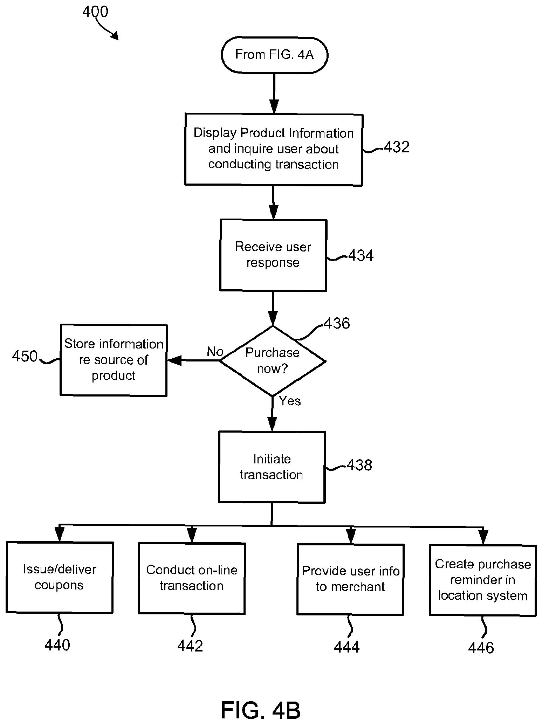

As discussed above, the various embodiments enable users to request information regarding products seen within still and video images received from a variety of content delivery systems, with such Product Queries processed in a Transaction Server 112 in order to reply with a Product Information message. FIG. 4 shows process 400 that may be implemented in the various embodiments. A content delivery system, such as mobile TV broadcast network 100 or an Internet multicaster, may broadcast content in the ordinary fashion, step 402, which are received and displayed by computing devices configured to receive particular form of content, step 404. While the received image content on a computing device, a user may see a product of interest and initiate a Product Query by selecting a portion of the displayed image using any of a variety of user interface tools, step 406. For example, if the computing device is a mobile device with a touch screen display, a user may initiate a Product Query simply by touching the display with a finger tip and circling the product of interest on the screen. The computing device may be configured to receive the user's input in order to select an indicated portion of the displayed image. The computing device may generate a Product Query message including that image selection as Image Selection Information which is transmitted to the Transaction Server 112 via a unicast network, step 408. The Transaction Server 112 receives the Product Query message and processes the image selection in a Product Correlation Engine 306 to recognize image objects contained in the image selection, step 410. As described below, a variety of different image recognition techniques may be implemented to identify or recognize particular image objects within the image selection. The recognized image objects may then be compared to product images stored within a merchandise database, step 412, to determine if there is a match, determination 414. If an image object matches or corresponds to a product within the merchandise database (i.e., determination 414 = "Yes"), information regarding the product, such as the brand name, source, and price of the product, may be transmitted to the mobile device in a Product Information message, step 416. The Recommendation Engine 308may also be used to refine product matches to fit a User Profile. If an image object does not match or correspond to a product within the merchandise database (i.e., determination 414 = "No"), the image object may be used in conjunction with other information within the Recommendation Engine 308 in order to develop an alternative product recommendation, step 418. The alternative product recommendation or recommendations may then be transmitted to the mobile device in a Product Information message, step 420.

Referring to FIG. 4B, process 400 continues as the user's computing device may receive the Product Information message from the Transaction Server 112, generate a display of the received product information, and prompt the user to indicate whether a transaction is desired, step 432. Such a display may be generated by a user interface which may receive the user's response, step 434, and from that response determine whether the user desires to purchase a product, determination 436. If the mobile device determines that the user wants to initiate a purchase (i.e., determination 436 = "Yes"), product information received in the Product Information message may be used to process the transaction, step 438. A variety of different transactions may be enabled by the various embodiments, such as delivering a coupon to the computing device to support a purchase, step 440, conducting an electronic on-line transaction via the Internet, step 442, enabling the purchase of the product in a store by delivering driving directions, product identity information, etc., step 444, and creating a GIS information package or other reminder to prompt the user to complete the transaction at a later time, step 446. Such transactions may be supported by a transaction engine 310 within the Transaction Server 118, by a transaction engine within a merchant's server (not shown), by a client application running in the computing device, or cooperatively by a computing device client application working in cooperation with a transaction engine 310 within the Transaction Server 112 or merchant server.

If the computing device determines that the user chooses not to purchase any displayed products (i.e., determination 436 = "No"), the computing device may store information contained in the Product Information message in memory for later reference by the user, step 450. For example, if the computing device is a mobile device it may store the product name and information regarding the location of stores carrying the product. Then, in the future, when the mobile device determines that the user is close by a store selling the product (e.g., based on GPS coordinates determined by a GPS receiver in the mobile device), a display may be generated to inform the user that the product may be purchased nearby. In an embodiment the Transaction Server or another server may store information about products that the user has declined to purchase in the past and use this information in preparing future purchase recommendations to avoid recommending the same product over and over. In another embodiment such information may also or alternatively be stored in the user's computing device.

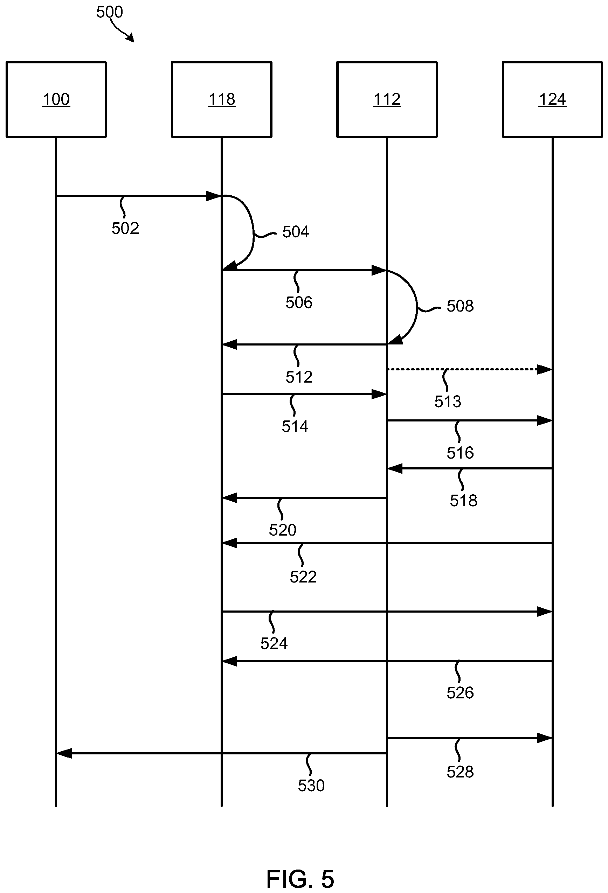

Examples of messages which may be passed among various components in the embodiment methods are illustrated in FIG. 5 which shows message flow diagram 500. This message flow diagram 500 is applicable to a mobile broadcast television content delivery system, but the messages in that system are representative of messages that may be exchanged in other types of content delivery systems. A mobile TV broadcast network 100 may broadcast video program content, message 502, which is received and displayed by mobile devices 118. A user viewing such video content may provide an input into the mobile device 118 indicating a product or a portion of the video containing a product of interest. The mobile device uses such input to generate a Product Query message, processing 504. The Product Query message is transmitted to a Transaction Server 112, such as via a unicast network, message 506. As described above, the Transaction Server 112 processes the image information received in the Product Query message to develop a Product Information, processing 508. The Transaction Server 112 generates a Product Information message that is transmitted to the mobile device 118 such as via a unicast network, message 512. When the Transaction Server 112 sends a Product Information message 512 to the mobile device 118, it may also send a message to the merchant 124 alerting it to the Product Information so that the merchant may be prepared to respond to a user transaction request, message 513.

If a user of the mobile device 118 decides to act on the Product Information (e.g., purchase one of the recommended the products), corresponding user inputs may be processed by the mobile device 118 to generate a transaction request message that maybe transmitted to the Transaction Server 112, message 514. The Transaction Server 112 may use the information in the transaction request message 514 to initiate a transaction with a merchant 124 by sending a transaction initiation message 516 that may be sent by a network, such as the Internet. In response, the merchant 124 may reply with a transaction response message 518 sent by the network, such as the Internet. As an example, the transaction response message 518 may include an electronic coupon for delivery to the mobile device 118. If the transaction response message 518 is returned to the Transaction Server 112, a transaction information message 520 may be forwarded by the Transaction Server 112 to the mobile device via the unicast network. Alternatively, the merchant 124 may respond directly to the mobile device 118, such as by transmitting a coupon or information via the unicast network, message 522.

If a user of the mobile device 118 decides to purchase a product, a purchase transaction may be completed directly between the mobile device 118 and the merchant 124, such as by transmitting a transaction request message via a unicast network, message 524. In response, a merchant 124 may reply with a transaction response message sent via the unicast network, message 526.

Periodically, the Transaction Server 112 may send transaction summary information to the merchant 124 such as information regarding consumer interest in certain products demonstrated in Product Query messages, as well as product recommendations sent to consumers in Product Information messages, message 528. Similarly, the Transaction Server 112 may send summary transaction information to the broadcaster 100 and/or content providers (not shown in FIG. 5) since such information may be useful to their business planning and advertising revenues, message 530.

The processing of the various embodiments may be illustrated by way of an example. If a user is watching the movie Terminator on a mobile device and suddenly has a desire to purchase the black leather jacket worn by Arnold Schwarzenegger, the user may highlight the portion of a video image containing the jacket, such as by circling the image portion with a finger on a touchscreen display. A mobile device processes that user input to generate a Product Query message which is transmitted to a Transaction Server within the mobile TV broadcast network (or elsewhere). This Product Query message may be transmitted via a unicast network, such as a cellular data communication network. The Transaction Server receives the Product Query message and processes the image selection in a Product Correlation Engine to recognize the particular product of interest. The Product Correlation Engine determines that the most likely product is the black leather jacket within the image selection. This information may be used to compare the black leather jacket image to available merchandise within a merchandise database. Not surprisingly, the particular black leather jacket worn by Arnold Schwarzenegger in the Terminator is no longer commercially available, so the particular product cannot be recommended for purchase. Instead, the Recommendation Engine may use information about the broadcast content (i.e., that the program is the Terminator), the user's prior purchasing behavior (e.g., information that may be stored within a database regarding the user's purchasing behavior, user account information, or information provided by the mobile device itself), and the identified product to develop a recommendation of other products that the user may be interested in purchasing. As part of developing a Product Information, the Recommendation Engine may also consider comments or additional information provided by the user as Annotation Information in the Product Query, such as jacket size, color preference, or other expressions of interest. For example, the Recommendation Engine may select two or three available black leather jacket designs that are similar to the jacket that appears in the movie. The Recommendation Engine may also recommend other merchandise, such as dark sunglasses similar to the model of worn by Arnold Schwarzenegger in the movie. The Product Information message may then be transmitted to the mobile device via a unicast network, such as the cellular data communication network that carried the Product Query message. The mobile device receives the Product Information message and a client application uses the information contained therein to generate a user interface display. A user may then use the user interface on the mobile device to indicate whether any of the recommended products should be purchased. If the user chooses to purchase one of the recommended products, the mobile device and/or the Transaction Server may initiate a transaction using any of a number of known transaction methods.

While the foregoing example concerned a mobile television broadcast content delivery system, the user and device operations would be similar with most other types of content delivery systems.

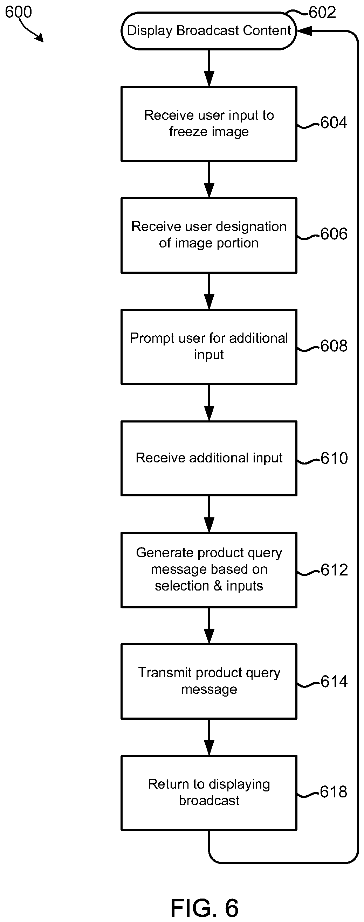

An example embodiment method that may be implemented within a computing device to enable a user to inquire about a product shown within a video image is illustrated in FIG. 6 which shows process 600. During the display of a broadcast program, step 602, users may see a product on the screen that interests them. Using a user interface device on the computing device, such as a touchscreen display, a pointer device, or scroll keys, a user may indicate a desire to freeze the video in order to indicate the product of interest. The computing device may be configured by a client application to receive that user input and cause the video display to pause on a particular image, step 604. Pausing of the video display may be accomplished by storing a frame in display memory while either suspending reception of broadcast content or continuing to store broadcast content in memory for delayed viewing. With the image frozen on the display, the user may designate a portion of the image containing the product of interest, such as by circling the product on a touchscreen display or with a computer mouse. A client application on the computing device may receive the user image designation, step 606, such as in the form of inputs from a touch screen display, a series of key strokes on arrow keys, or inputs from a pointing device (e.g., a computer mouse or touchpad).

The client application may be configured to interpret the user inputs as selecting a portion of the displayed image and store coordinates of the selected portion in a manner that can be communicated to a Transaction Server 112. For example, the client application may record the particular pixels selected by the user as image data. As another example, the client application may record boundary coordinates of the image selection relative to particular coordinate axes, such as a corner of the video image. As a further example, the client application may record the pixel numbers encompassed within the image selection but not the image data. In a further example embodiment, the client application may record an image identifier and coordinates of a user touch to the image, such as the frame number of the touched image and the pixel or distance coordinates (e.g., X and Y distances from a coordinate axis like a corner). Other methods may also be used for identifying the location of user touch or an area encircled within a user designated image selection in a manner that will enable the Transaction Server to obtain the image from an accessible database and determine the portion of the image selected by the user. For ease of reference, any data that identifies a location or area of an image selection or includes the selected image data are collectively referred to herein as Image Selection Information. It is noted that Image Selection Information is information specific to an image and is not intended to encompass information appended or linked to an image such as a hyperlink.

The client application may also generate a prompt on the display prompting the user to provide additional input regarding the Product Query. For example, the user may be prompted to type in a description or quantity for the desired product, such as a size, color, or number of units the individual is interested in purchasing. Additionally, the prompt may invite the user to include product descriptors, such as "jacket," "sweater," "surfboard," etc. Further, the prompt may invite the user to provide user input as spoken words which the mobile device may record for inclusion in the Product Query message. The more information provided by the user in step 608 the better the Transaction Server 112 may be able to identify the product of interest and provide relevant Product Informations to the user. For example, the user may be prompted to speak a Product Query, such as "how much is that sweater?" Such additional input from the user may enable the Transaction Server 112 to determine that the user is interested in a sweater and that the user wants to know the price. As another example, a user may say "does that jacket come in size extra large?" Such information would help the Transaction Server 112 determine that the user is interested in the jacket within the image selection and determine the user's desired size.

The client application operating in the mobile device may receive the additional user input as Image Selection Information, step 610, and generate a Product Query message that includes the Image Selection Information (i.e., the information regarding the user selected portion of the video image) along with Annotation Information and any additional inputs, step 612. The Product Query message may then be transmitted by the computing device to the Transaction Server 112 via a unicast network122, such as the Internet or a cellular data communication network, step 614. Once the Product Query message has been transmitted, the computing device may return to displaying the broadcast content, step 618. In so doing the computing device may begin playing content stored in memory during the Product Query process so that the user continues viewing the content from the point that the image was frozen on the display. Alternatively, the computing device may simply begin receiving and displaying the content at the current point in the broadcast program.

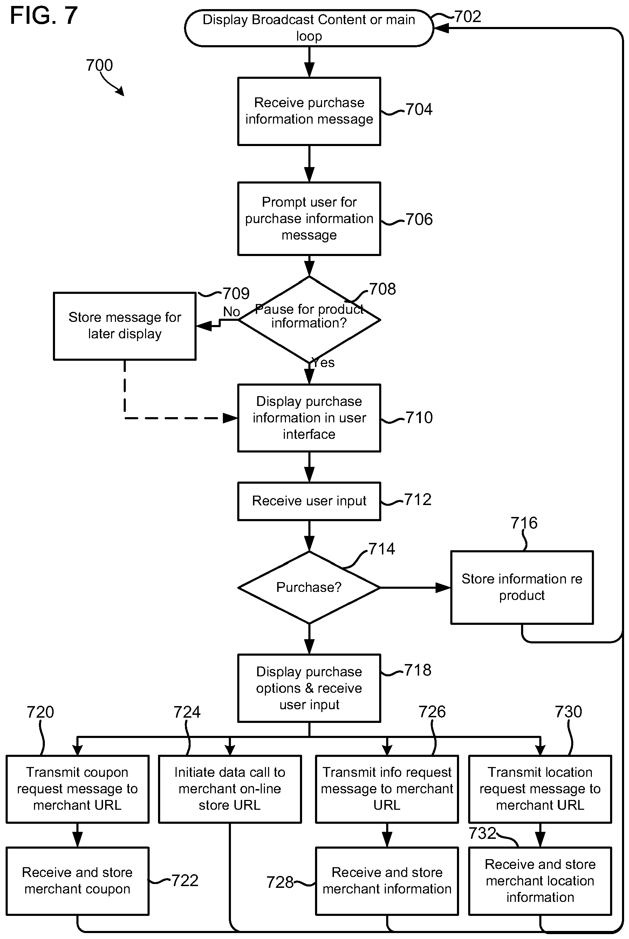

After transmitting a Product Query message, a computing device may receive a response from the Transaction Server 112 in the form of a Product Information message. An example embodiment method for receiving such a message that may be implemented within a computing device, such as in a client application running on the computing device, is illustrated in FIG. 7 which shows process 700. While the computing device is performing other tasks, such as operating within a main loop or displaying a broadcast program, step 702, a Product Information message may be received and processed by the computing device, step 704. A client application operating in the computing device may parse the received Product Information message and generate a display using the included information that prompts the user about conducting a purchase, step 706. This process may involve informing the user that a Product Information message has been received and prompting the user to indicate whether the current activity (e.g., as viewing a broadcast program) should be interrupted to view the contents of the message, determination 708. If the user response to such a prompt indicates that the current program should not be interrupted (i.e. determination 708 = "No"), the computing device may be configured to store the received Product Information for presentation to the user at a later time, step 709. When the user indicates that the Product Information should be displayed, the computing device may generate a display based on the received message content, step 710. For example, the Product Information message may include a hypertext script, such as HTML or XML, which causes the computing device to generate a display as defined by the Transaction Server 112. As another example, the Product Information message may include data and images in a format that a client application operating on the computing device can use to generate a suitable display. As part of the display, user interface menu options may also be presented to enable the user to select an option conducting a transaction for one or more products listed in the display.

When the computing device receives a user response to the purchase display prompt, step 712, it may determine whether the user indicates that a purchase should be initiated, determination 714. If the user indicates that no purchase should be initiated (i.e., determination 714 = "No"), the computing device may be configured to store the product information from the Product Information message in memory, step 716, and return to the operation underway before the message was received, returning to step 702. For example, the computing device may be configured to store information regarding the recommended product(s) and sources (e.g., stores where such products may be purchased) in memory so that the user can recall such information or the computing device may later remind the user about the availability of such products, such as when the user is within the vicinity of a store selling the product.

If the user indicates that a purchase should be initiated (i.e., determination 714 = "Yes"), the computing device may generate another user interface display providing the user with options for conducting such a transaction, step 718. A transaction may be accomplished using any known electronic or conventional purchase transaction method. The display of transaction options may list alternative ways that the user may initiate a transaction, or alternatively begin a transaction according to previously selected transaction process.

In a first embodiment transaction method, a user may opt to receive a coupon that entitles the user to a discounted price for the particular product, in which case the user may transmit a request for such a coupon in a message addressed to the Transaction Server 112 or the merchant, such as a request to access a website addressed to the merchant URL, step 720. Such a message may be any form of addressable message, such as SMS, e-mail or a TCP/IP message addressed to a URL, and may be transmitted via a unicast wireless network, such as the Internet, a cellular data communication network or a WiFi network. The address for a coupon request message may be included within the Product Information message, and the computing device may be configured to use that such address information when generating and transmitting a coupon request message. The computing device may further be configured to receive a coupon from a merchant and store the coupon in memory for use in a later transaction, step 722. Such a merchant coupon may be transmitted via the unicast network used to send the coupon request message or maybe transmitted by another content delivery system. For example, methods and systems for transmitting coupons to mobile devices via mobile TV broadcast transmissions are described in U.S. Patent Application No. 12/417,493 entitled "Systems and Methods for Distributing and Redeeming Credits on a Broadcast System" filed April 2, 2009, the entire contents of which are hereby incorporated by reference.

In a second embodiment transaction method, a user may opt to access a merchant website in order to conduct an online transaction, in which case the computing device may initiate an Internet connection or a data call to the merchant's URL, step 724. The merchant URL may be included within the Product Information message, and the computing device may be configured to use the provided URL when initiating the merchant server access. Once an online connection is established to a merchant server, the user may complete an online purchase transaction in an ordinary manner.

In a third embodiment transaction method, a user may opt to receive information regarding stores or merchants that carry the product of interest, in which case the computing device may be configured to transmit a request for such information to the merchant URL, step 726. Such a message may involve accessing the merchant website so that the user can obtain more information about the product and the merchant as well, as identify nearby store locations and request driving directions. Alternatively, the v device may format a data request message specifying the information desired in a format that can be processed by the merchant server. The computing device may then receive and store the product and merchant information, step 728. For example, the computing device could store a website image downloaded from the merchant URL. As another example, the computing device may receive and store an electronic brochure regarding the product or the merchant.

In a fourth embodiment transaction method, a user may opt to retrieve store location information for stores or merchants that carry the product of interest, in which case the computing device may be configured to transmit a location request message to the merchant URL, step 730. The computing device may format a data request message specifying the location information desired in a format that the merchant server can process. The computing device may then receive and store the received store location information, step 732. For example, the merchant location information may be in the form of GPS coordinates or geographic information service (GIS) data that a mobile device can implement in a navigation or GIS application that can assist the user in locating the nearest store offering the particular product for sale.

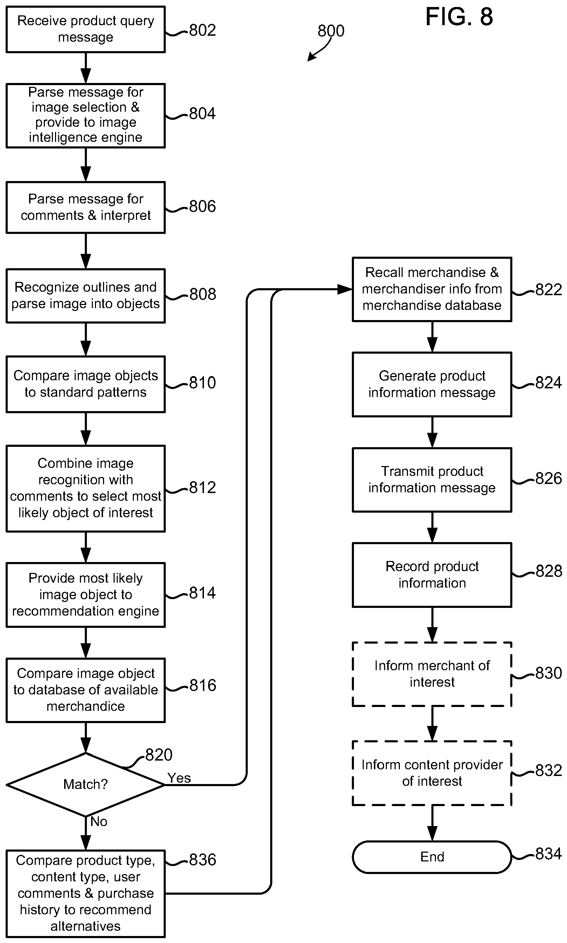

As mentioned above, the Transaction Server 112 may receive and automatically process Product Query messages received from computing devices. An example embodiment method by which a Transaction Server 112 may respond to a Product Query message is illustrated in FIG. 8 which shows process 800. In process 800 the Transaction Server 112 may receive a product query message via a unicast network, such as the Internet, a local area network, a cellular data communication network, or a combination of two or more such networks, step 802. For example, a mobile device 118 may transmit a product query message via a cellular data communication network 122 to a mobile TV broadcast network 100 which forwards the message via a local area network 102 to the Transaction Server 112. The Transaction Server 112 may parse the received product query message to obtain the portion of the broadcast image selected by the user and provide this image selection to a Product Correlation Engine, step 804. The Transaction Server 112 may also parse the received Product Query message to obtain and process any Annotation Information provided by the user, such as text or a verbal recording, step 806. If Annotation Information received from the user is in the form of a sound recording of a voice, the Transaction Server 112 may process the verbal comments in a voice-recognition software module. Recognized or written Annotation Information may be parsed and analyzed to recognize words that may be useful in interpreting the Product Query, such as product nouns, adjectives and numbers. Such processing may include analyzing the user comment in the context of the received image, the context of the broadcast program, and previous user transactions.

The received image selection may be processed in a Product Correlation Engine to recognize outlines of objects and parse the image into recognized objects, step 808. A variety of known image processing methods may be used to identify objects within the image selection that may be products and ignore elements within the image selection that are not relevant to a Product Query, such as background scenery, human features and common structures. Image objects may be further recognized by comparing recognized outlines to a database of standard or known objects. Further, objects may be recognized by comparing recognized outlines to a database of images of known product configurations. Still further, objects may be recognized by comparing recognized outlines to a database of image of products known to be present in the broadcast content, such as images related to product placement advertising. A database of images related to product placement advertising may be obtained from the content provider.

Identified image objects may be compared to known patterns of products in order to further correlate objects within the image selection with purchasable products, step 810. If the image selection includes multiple image objects which compare favorably with known product patterns or one or more image objects compares favorably to a plurality of different product patterns, the Product Correlation Engine may use information obtained from user's Annotation Information to select a product of interest to the user, step 812. For example, if an image selection includes the torso of an actor wearing a leather jacket and sunglasses, the Product Correlation Engine might identify the leather jacket and the sunglasses as potential product image objects. To select the image objects of most interest to the user, the Product Correlation Engine (or other module within the Transaction Server 112) may determine whether the user's Annotation Information referred to a jacket, sunglasses, a clothing size, color or a style that would further clarify the user's interest. Thus, if the Annotation Information included "in size 44," the Product Correlation Engine (or other module within the Transaction Server 112) may conclude that the user is interested in the leather jacket, and thus select one image object (i.e., the leather jacket) of most likely interest to the user in step 812.

Information regarding a most likely image object may then be processed in a Product Correlation Engine (or other module within the Transaction Server 112) in order to formulate a Product Information message, step 814. A Product Correlation Engine may compare the selected image object to a database of available merchandise, step 816. In doing so, the image object may be compared to images of available merchandise stored within a merchandise database. As part of this process, the Product Correlation Engine may also consider the user Annotation Information, especially regarding style, size, color and other distinguishing characteristics that may be matched to available merchandise in order to better address the user's Product Query. In conducting such a comparison, the Product Correlation Engine may determine whether the image object of interest to the user matches or corresponds to a particular merchandise product available in the marketplace, determination 820. This determination may be limited to the merchandise of a particular one or few merchants or suppliers, or maybe practically unlimited encompassing any product available or mentioned on the Internet (e.g., a Google search on matching products).

It should be appreciated that image processing, product recognition and comparisons to available merchandise may be accomplished in a single process, such as be comparing the image selection to a database of images of available products or to a database of images of product placement merchandise.

If a match or correspondence between the selected image object and a product or products available in the marketplace is found (i.e., determination 820 = "Yes"), the Recommendation Engine may recall information regarding the matched merchandise and available sources (e.g., suppliers and merchandisers) from a merchandise database, step 822. The recalled information may be used to generate a Product Information message, step 824, which is transmitted to the computing device, step 826. The Product Information message may be transmitted to the computing device in any known unicast method, such as SMS, e-mail, or TCP/IP data message. Alternatively, a Product Information message may be broadcast in a format that can only be processed by the destination computing device, such as encrypted or tagged in a manner that the destination computing device can receive and process and other computing devices will ignore.

The Transaction Server 112 may also record information regarding transmitted Product Information messages, step 828, such as maintaining a database of Product Queries and corresponding Product Information messages transmitted to particular computing devices. Such information may be of value to manufacturers and merchandisers, as well as content providers. For example, such information may be used for future product placement guidance. Further, maintaining a database of Product Information messages may facilitate completing corresponding purchase transactions. The Transaction Server 112 may also inform a merchant when a Product Information message is transmitted so that the merchant can be prepared to receive or recognize a subsequent purchase transaction by the particular mobile device, optional step 830. In addition to enabling the merchant to complete a transaction, such information may be useful to merchants for advertising and market research purposes. Additionally, the Transaction Server may inform the provider of the broadcast content that a user has expressed an interest in a product and a Product Information message has been sent, optional step 832. Content providers may find such information to be useful for generating advertising revenue and developing sponsors for their programs. Once a Product Information message has been transmitted and saved, and interested parties have been informed, the process for responding to a Product Query message may end, step 834. It should be noted that merchants and content providers may not be sent information regarding a particular transaction at the time the transaction is conducted. Instead, such information may be sent periodically, such as once daily, weekly or monthly and in a summary format, since the merchants and content providers may be more interested in general trends and consumer responses than particular transaction details.

If no match or correspondence is found between the image object and a product or products available in the marketplace (i.e., determination 820 = "No"), the Recommendation Engine may use information regarding the identified image object, the user comments, and other available and relevant information in order to recommend one or more alternative products that may be of interest to the user, step 836. In identifying a recommended alternative product, the Recommendation Engine may consider a variety of sources of information that may provide insights regarding the user's interests, such as the nature or genre of the broadcast program, products or styles associated with actors within the broadcast program, the particular user's prior purchasing history, the user's demographic information, etc. For example, if a particular product is no longer commercially available, the Recommendation Engine (or other module within the Transaction Server 112) may identify a later model or similar product that is commercially available. Such alternative product recommendations, as well as information regarding the unavailability of the indicated product, may be used in generating the Product Information message, steps 822, 824.

Even if a match or correspondence is found between and a product or products available in the marketplace (i.e., determination 820 = "Yes"), the Recommendation Engine may also use information regarding the matched product, the user's Annotation Information, the User Profile, and other available and relevant information in order to recommend one or more additional products that may be of interest to the user, step 836. In identifying recommended additional products, the Recommendation Engine may also consider a variety of sources of information that may provide insight into the user's interests, such as the nature or genre of the broadcast program, products or styles associated with actors within the broadcast program, the particular user's prior purchasing history, the user's demographic information, etc. For example, if the identified and matched product is an article of clothing being worn by an actor in the broadcast program, the Recommendation Engine (or other module within the Transaction Server 112) may identify other products also being worn by the actor, such as sunglasses or a hat. As another example, the Recommendation Engine may recommend products associated with or related to the program or program genre. As a further example, the Recommendation Engine may recommend products based upon prior purchases made by the user, such as refills or additional quantities. Such additional product recommendations, as well as matched product information may be used in generating the Product Information message, steps 822, 824.

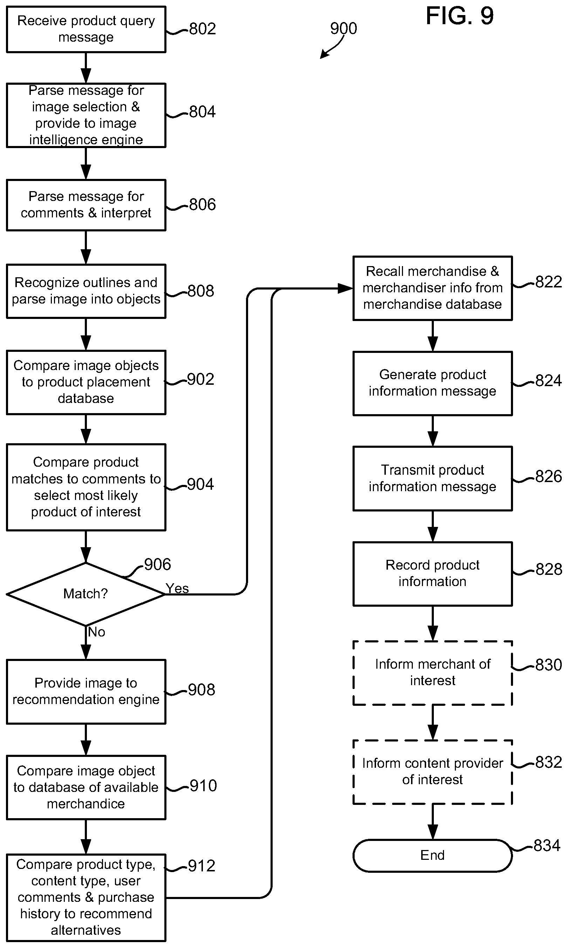

While the embodiment process 800 illustrated in FIG. 8 uses image recognition processing to identify products of interest, other methods may be used for correlating a Product Query message to particular merchandise. In an alternative embodiment illustrated in FIG. 9, product placement information supplied by the content provider regarding particular products placed within specific image frames and locations may be used in conjunction with image recognition processing in order to identify commercially available products of interest to the user. This embodiment method may employ processes similar to those described above with reference to FIG. 8 for like numbered steps. Once image objects are recognized within the image selection received in the Product Query message, step 808, the Product Correlation Engine may compare such image objects to product placement information supplied by the content provider and/or stored in a product placement database, step 902. It should be appreciated that the processes of step 808 and 902 may be accomplished in a single process. For example, if a content provider makes available a database of images of advertising products as the products appear in the video content, recognizing image objects and matching image objects to products can be accomplished by an image comparison algorithm comparing the image selection to the images in the database.

When multiple image objects compare favorably to multiple product placements, or one image object compares favorably to multiple product placements, the Product Correlation Engine may compare the product matches to user Annotation Information to select a most likely product or products of interest, step 904. These comparisons to product placement information may be used to determine whether there is a match or correspondence between the user image selection and product placements, determination 906. If an image object is matched to a product placement (i.e., determination 906 = "Yes"), this information may be used to generate the Product Information message, steps 822, 824, which is transmitted to the inquiring computing device, step 826.

If there is no match between the image object and products placed within the broadcast content (i.e., determination 906 = "No"), the image object and other information may be provided to the Recommendation Engine (or other module within the Transaction Server 112), step 908, to develop a Product Information. The Recommendation Engine may compare the image object to a database of available merchandise, step 816, in a manner similar to that described above with reference to FIG. 8. The Recommendation Engine may also use the image object and other available information to recommend alternative or additional products, step 836, as described above with reference to FIG. 8.

Since product placement advertising is an increasingly important form of advertising and content providers can know for certain the products that appear in the video content, content providers may supply a transaction server 112 with more detailed information regarding product placements. The example of a product placement image database that can be used for image comparison algorithm is mentioned above with reference to FIG. 9. In a further example, the product placement information may be supplied in terms of an image identifier, such as frame numbers (or image time stamps), and product locations within each frame (e.g., image coordinates). If a content provider supplies such product placement information, the transaction server 112 may not need to conduct image recognition processing. Further, the Product Query message generated by a mobile device need not include a portion of the image, since the indicated image coordinates (e.g., frame number and relative location coordinates) is all the information needed to identify a product placed in the video content. Thus, the information regarding a portion of a broadcast video image included in a Product Query message may be an image selection (i.e., image data) or a location (e.g., frame number and coordinates) within an image.

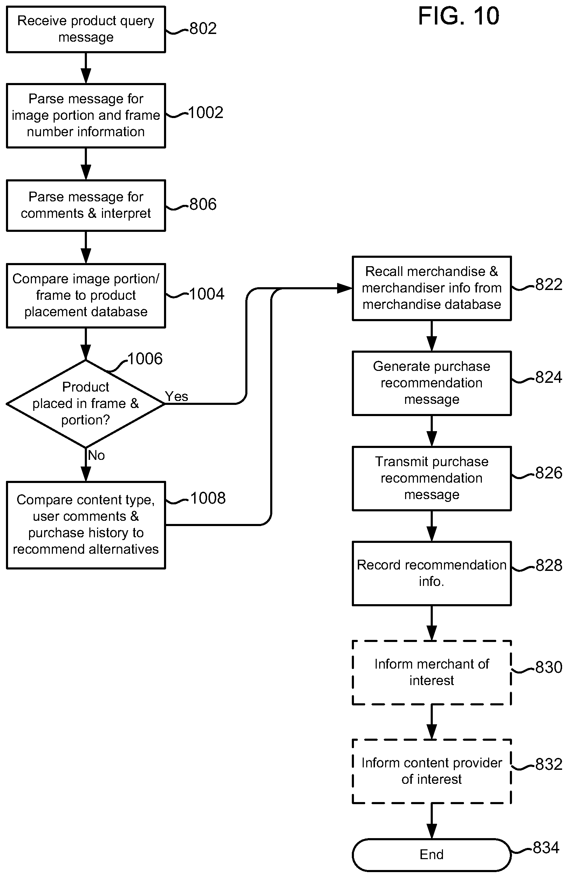

An example method for generating Product Information messages utilizing detailed product placement information to obviate the need for image processing is illustrated in FIG. 10 shows process 1000. In this example process 1000, a Product Query message received in step 802 may be parsed to obtain the image portion and information regarding the image frame number (or similar information), step 1002. Thus, in this embodiment, the mobile device may transmit information regarding an image quadrant or coordinates within an image along with the particular frame number or broadcast timestamp of the image on which the user indicated a product interest. For example, in this embodiment, a user may indicate a product of interest simply by freezing the broadcast of a particular image and touching the desired product on a touchscreen or "clicking" on the product with a pointer device (e.g., a computer mouse). The mobile device may format a Product Query message which contains the image coordinates of the user's touch or click along with the frame number or time stamp of the particular image. The user may also provide comments which the transaction server 112 may receive and parse, step 806, in a manner similar to that described above with reference to FIG. 8. The transaction server 112 may then use the image touch coordinates and frame number (or timestamp) to search a product placement database, step 1004, to determine whether an advertised product was placed in the particular frame at the indicated touch coordinates or image portion, determination 1006. If a product was placed in the particular frame at the indicated location (i.e. determination 1006 = "Yes"), the matched or corresponding product may be used to generate a Product Information message, steps 822, 824, in a manner similar to that described above with reference to FIG. 8. If no product was placed in the particular frame at the indicated location (i.e. determination 1006 = "No"), information regarding the broadcast content, the user's comments and the user's purchase history may be used to recommend alternative products that may be of interest to the user, step 1008. Even if the user indication matches or corresponds to a placed product (i.e., determination 1006 = "Yes"), information regarding the matched or corresponding product, the content type, the user's comments and the user's purchase history may be used to recommend additional products that may be of interest to the user, step 1008. Such alternative or additional products may be used to generate the Product Information message, steps 822, 824, in a manner similar to that described above with reference to FIG. 8.

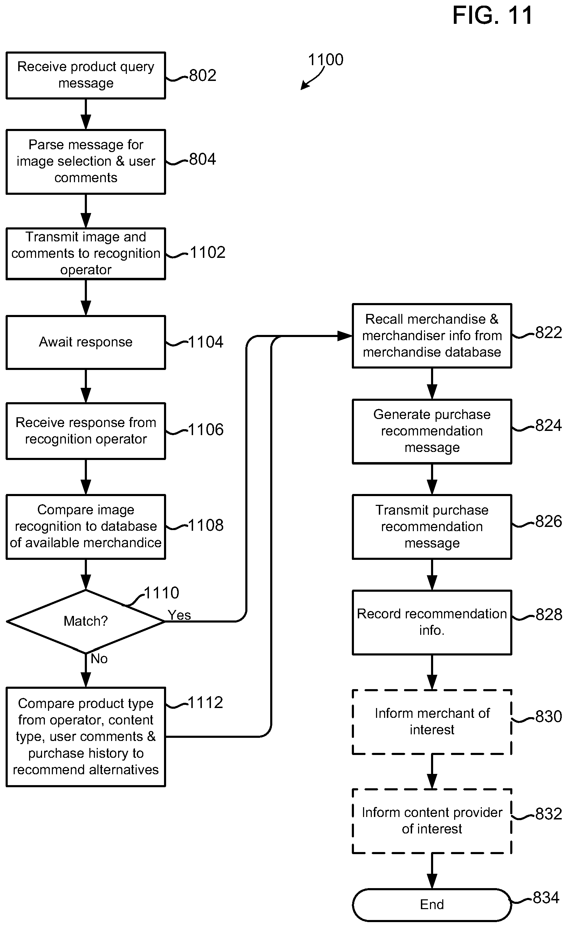

Another embodiment is illustrated in FIG. 11 which shows process 1100 which uses human image recognition processes in order to better match selected images to products of likely interest to a user. In this embodiment, user image selections and comments parsed from received product query messages, steps 802, 804, may be transmitted to an organization which employs people to look at image selections and send back messages regarding recognized objects, step 1102. It is well-known that human beings can recognize objects in images far better and faster than any known computer process. Thus, a service provider could receive image queries and pass received images to operators who can look at the images on workstations and type in a description or product name of products recognized by the operators. Such operators could be employees of the service provider, members of an online community or users of a computer game that includes image matching/selection as a recreational activity, or workers of an open market platform, being compensated on a per job performance. Such operators may simply identify recognized objects, such as "jacket" or "sunglasses". Alternatively, operators may be supported by a visual database so that they may further identify product suppliers and models. In this manner, humans may recognize specific products and provide identifiers that can be used to locate such products in the marketplace.

A Transaction Server 112 may await the response from such operators, step 1104, and when such a response is received, step 1106, compare the received product information to a database of available merchandise, step 1108, to determine if there is a match or correspondence, determination 1110. If the recognized product matches or corresponds to available merchandise (i.e., determination 1110 = "Yes"), this information may be used to generate the Product Information message, steps 822, 824, in a manner similar to that described above with reference to FIG. 8. If there is no match between the recognized product and available merchandise (i.e., determination 1110 = "No"), a Recommendation Engine may use the product type received from the operator along with information regarding the broadcast content type, user comments and the user's purchase history to recommend alternative products that may be of interest to the user. Even if the recognized product matches or corresponds to available merchandise (i.e., determination 1110 = "Yes"), a Recommendation Engine may use the matched product or corresponding product along with information regarding the broadcast content type, user comments and the user's purchase history to recommend additional products that may be of interest to the user. Such alternative or additional products may be used to generate the Product Information message, steps 822, 824, in a manner similar to that described above with reference to FIG. 8.

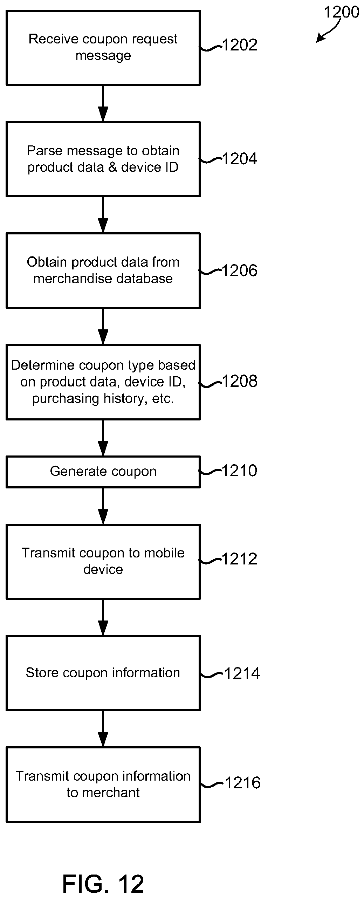

As mentioned above, one method of facilitating a transaction involves transmitting a coupon for a recommended product to the computing device which the user can redeem at the time of purchase. FIG. 12 shows process 1200 which illustrates an embodiment method that may be implemented within a Transaction Server 112 or merchant server (both of which are referred to here as the "receiving server") to accomplish such a coupon delivery. A receiving server may receive a coupon request message from a computing device, step 1202, such as via a unicast network. The receiving server may parse the message to obtain the product data as well as an identifier of the requesting computing device, step 1204. The receiving server may use the product data to obtain further information regarding the product from a merchandise database, step 1206. The receiving server may further determine a coupon type based upon the obtained product data, the computing device identifier, the user's purchase history (e.g., a record of past transactions with the merchant or merchants of the user associated with the identified mobile device), the User Profile, and other information, step 1208. Using this information, the receiving server may generate the coupon, step 1210, which may be in the form of an encrypted data message which includes sufficient information for a merchant to receive the coupon from a user and credit the user for the value of the coupon. The structure and content of electronic coupons are well-known, examples of which are included in U.S. Patent Application No. 12/417,493 previously incorporated by reference. The generated coupon may then be transmitted to the computing device, step 1212. Coupons may be transmitted via a unicast network, such as the Internet or a cellular data communication network, or by a broadcast network with appropriate packaging of the coupon information to affect delivery to particular computing devices. The coupon information may also be stored within the Transaction Server 112 for future reference, step 1214, and/or transmitted to a merchant server for use in completing a transaction, step 1216.

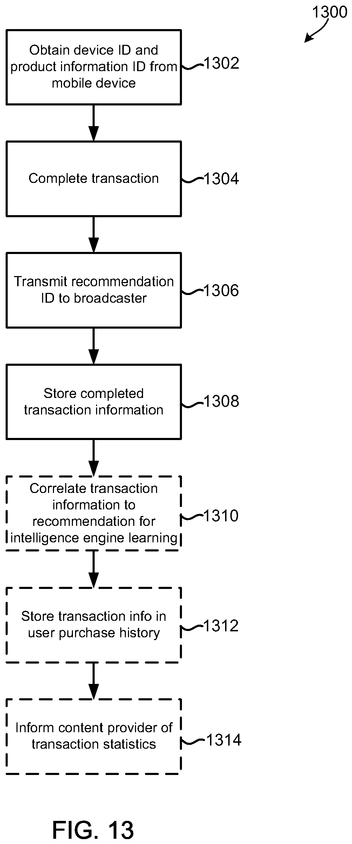

For a variety of reasons, a Transaction Server 112 may be configured to keep a record of completed transactions resulting from responses to Product Query messages. Such information may be very valuable for merchandisers and content providers as records of actual transactions prompted by the broadcast content, product placements and the services provided by the various embodiments. FIG. 13 shows process 1300 which illustrates an embodiment method for tracking such transaction information. When a transaction is initiated, whether online or in a physical storefront, information regarding the computing device and an identifier of a particular Product Information may be obtained from the purchaser's computing device, step 1302. For example, if the purchase involves the process of using an electronic coupon stored within the computing device, that coupon may include an identifier associated with the Product Information that resulted in the coupon. The process of transmitting the coupon to the point-of-sale system may communicate the computing device identifier (e.g. telephone number, MAC, or other device ID). Having received that information, the point-of-sale system may complete the transaction, step 1304, and transmit the identifiers associated with the Product Information (or other transaction-related identifiers) to the Transaction Server, step 1306. The point-of-sale system may also store the completed transaction information in memory, step 1308. A Transaction Server 112 may correlate information regarding completed transactions and corresponding Product Information messages in order to improve the processing of the Recommendation Engine, such as by implementing learning algorithms, optional step 1310. Additionally, the Transaction Server 112 may store the transaction information within a user purchase history database for use in responding to future Product Query messages, optional step 1312. Additionally, the Transaction Server 112, or an owner of that server, may wish to inform content providers of purchase statistics, and thus the advertising effectiveness of product placement advertising, optional step 1314.

While the foregoing description of users selecting products within broadcast content referred to non-advertising content, the embodiments and processes may apply equally well to advertising (i.e., commercial) content. Thus, if a user submits a Product Query including an image from a commercial, the various embodiments will perform in a similar manner to result in a Product Information message related to the commercial. Thus, the various embodiments may provide a direct purchasing option for broadcast commercials.

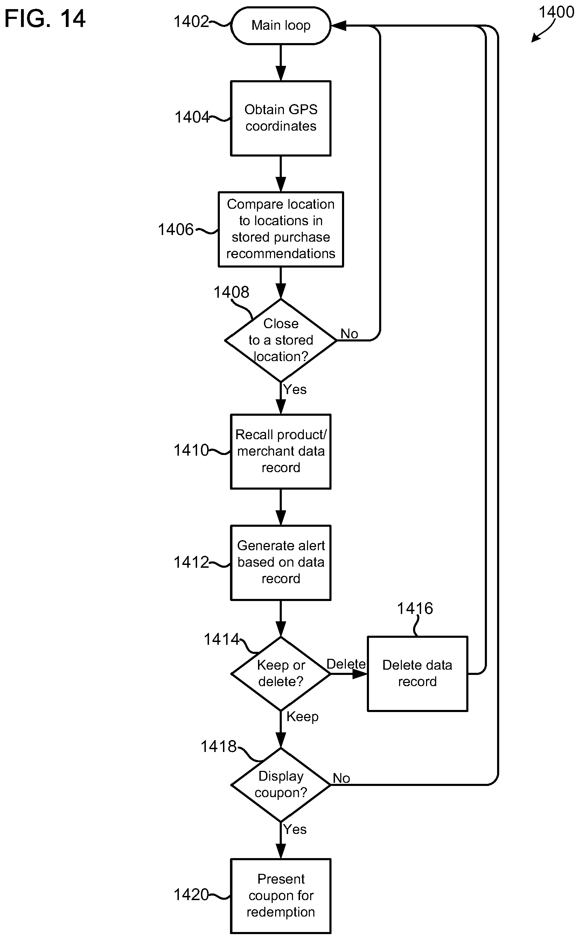

As mentioned above, an embodiment method for completing a transaction may include transmitting information regarding a merchant or store where the product of interest may be purchased. Fig. 14 shows process 1400 which illustrates an example method for implementation in a mobile device for accomplishing such a transaction. As described above with reference to FIG.7, a mobile device may receive location information for a store or merchants in a Product Information message or in messages received in response to a purchase initiation from the mobile device (see steps to 718, 730, 732). Referring to FIG. 14, in process 1400 a mobile device may be configured to operate with a main loop, step 1402, which schedules a normal processing within the mobile device. As part of the main loop, the mobile device may periodically obtain GPS coordinates from a GPS receiver circuit within the mobile device, step 1404. A mobile device processor may compare the obtained GPS coordinates to the location data received in response to Product Queries that is stored in memory, step 1406. In doing this comparison, the processor may determine whether the mobile device is currently located close by a merchant or store that has been identified as a source for a product of interest in the past, determination 1408. If the mobile device is not close to any merchants or store locations stored in memory (i.e., determination 1408 = "No"), the mobile device processor may return to the main loop, step 1402. However, if the mobile device processor determines that its current location is within a predetermined distance of a store or merchant location stored in memory (i.e., determination 1408 = "Yes"), the processor may recall the data records stored in memory associated with that particular product of interest, step 1410. Using the information recalled from memory, the processor may generate a display or alert to inform the user that a source of a product of interest is nearby, step 1412. As part of this display, the processor may generate a prompt to enable the user to indicate whether the information regarding the source for the product should be kept or deleted, determination 1414. If, in response to such a prompt, the user indicates that the data record associated with that product should be deleted (i.e. determination 1414 = "delete"), the mobile device processor may delete the corresponding data record from memory, step 1416, and return to the main loop, step 1402. If the user does not choose to delete the data record (i.e., determination 1414 = "keep"), the processor may generate a display enabling the user to indicate whether a coupon for the particular product should be displayed, determination 1418. If the user indicates that the coupon should not be displayed (i.e., determination 1418 = "No"), this may indicate that the user is not interested in purchasing the product at this time, and therefore the processor may return to main loop, step 1402. If the user requests that the coupon be displayed (i.e., determination 1418 = "Yes"), the processor may recall the coupon information stored in memory and generate a display of the coupon or otherwise prepare an electronic coupon for redemption, step 1420. Once the coupon redemption has been accomplished, the processor may return to the main loop, step 1402.

In the alert generated in step 1412, the processor may provide the location information of the merchant or store to a navigation or GIS application so that the application can provide the user with driving or walking directions. The alert may also include any other information provided by the merchant or the Transaction Server 112 that may facilitate a purchase transaction, such as store hours, a store telephone number, an advertising display, a listing of additional products that may be of interest to the user carried by the store, and any other similar marketing or useful information.

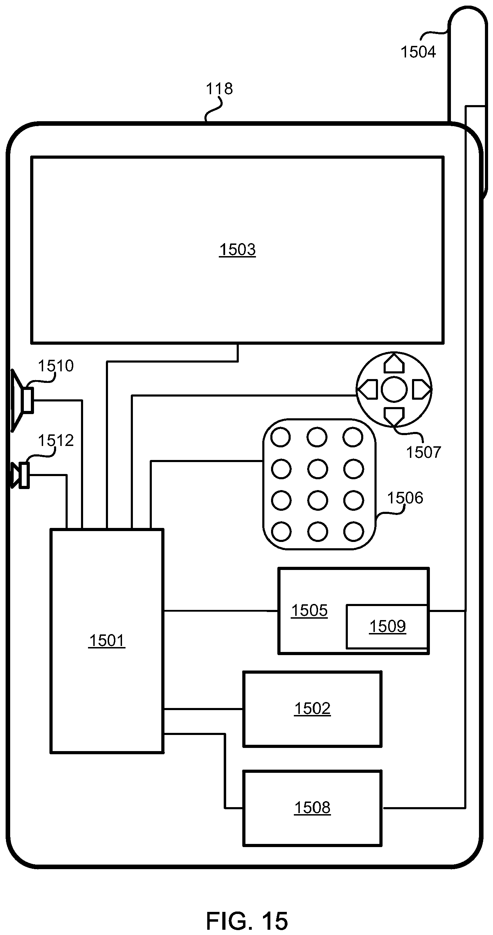

Typical mobile devices 118 suitable for use with the various embodiments will have in common the components illustrated in FIG. 15. For example, an exemplary mobile device 118 may include a processor 1501 coupled to internal memory 1502, and a display 1503. Additionally, the mobile device 110 may have an antenna 1504 for sending and receiving electromagnetic radiation that is connected to a wireless data link and/or cellular telephone transceiver 1505 coupled to the processor 1501 and a mobile TV broadcast receiver 1508 coupled to the processor 1501. Mobile devices typically also include a key pad 1506 or miniature keyboard and menu selection buttons or rocker switches 1507 for receiving user inputs. Also, mobile devices typically also include a speaker 1510 coupled to the processor 1501 for producing sound, and a microphone 1512 coupled to the processor 1501 for recording sound, such as a user's voice.

In some mobile devices 118 global positioning system (GPS) receiver circuitry 1509 may be coupled to the processor 1501 and to the antenna 1504. In some implementations, the GPS receiver circuitry 1509 may be incorporated within a part of the wireless transceiver 1505 as illustrative. In other implementations, the GPS receiver circuitry may be a separate module coupled to the processor 1501.

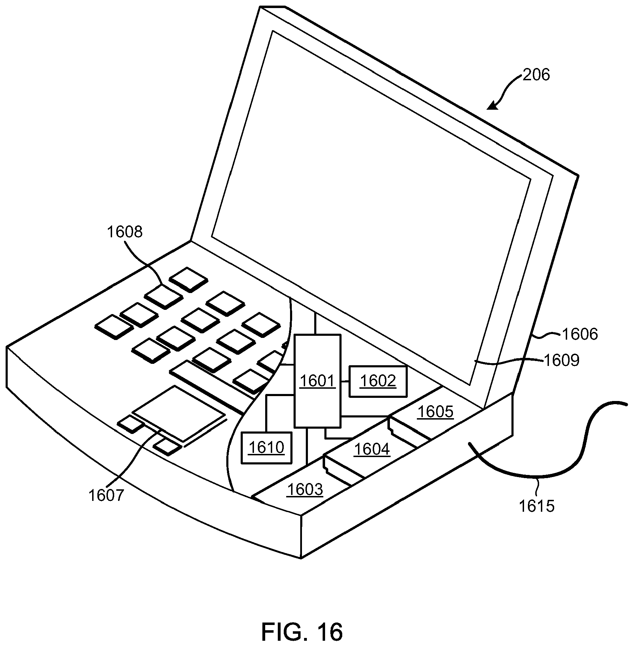

The embodiments described above may also be implemented on any of a variety of computing devices, such as a notebook computer 260 illustrated in FIG. 16. Such a notebook computer 260 typically includes a housing 266 that contains a processor 1601 coupled to volatile memory 1602 and a large capacity nonvolatile memory, such as a disk drive 1603. The computer 260 may also include a transceiver 1605 coupled to the processor 1601 that is configured to communicate with a network, such as the Internet. The transceiver 1605 may be a wireless transceiver configured to couple with a wireless communication network, such as a cellular data network or a wireless wide area network (e.g., WiFi). Alternatively or in addition, the transceiver 1605 may include modem circuitry for coupling to a wired network 1615, such as a connection to the Internet. For ease of reference each of the alternative types of receiver, modem and transceiver that may be implemented within a computer 260 for receiving content from a communication network are referred to generally as transceivers. The computer 260 may also include a a mobile TV broadcast receiver 1610 coupled to the processor 1601 and to an antenna (not shown) for receiving mobile broadcast television signals. The computer 260 may also include a floppy disc drive 1604 and/or a compact disc (CD) drive 1605 coupled to the processor 1601. The computer housing 1606 typically also includes a touchpad 1607, keyboard 1608 and display 1609. The software instructions configuring the processor 1601 may be stored on any form of tangible processor-readable memory, including: a random access memory 1602, hard disc memory 1603, a floppy disk, a compact disc (readable in a compact disc drive 1604), electrically erasable/programmable read only memory (EEPROM), read only memory (such as FLASH memory), and/or a memory module (not shown) plugged into the computing device 260, such as an external memory chip or a USB-connectable external memory (e.g., a "flash drive") plugged into a USB network port.

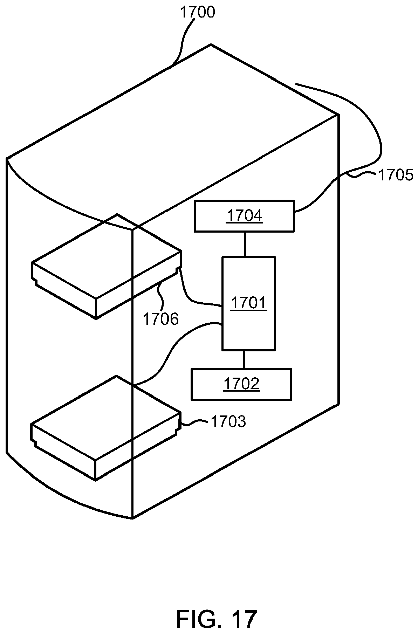

The embodiments described above may be implemented with any of a variety of general purpose computers or server devices, such as the server 1700 illustrated in FIG. 17. Such a server 1700 typically includes a processor 1701 coupled to volatile memory 1702 and a large capacity nonvolatile memory, such as a disk drive 1703. The server 1700 may also include a floppy disc drive and/or a compact disc (CD) drive 1706 coupled to the processor 1701. The server 1700 may also include network access ports 1704 coupled to the processor 1701 for communicating with a network 1705, such as the Internet.

The processors in the various computing devices 1501, 1601, 1701 may be any programmable microprocessor, microcomputer or multiple processor chip or chips that can be configured by software instructions (applications) to perform a variety of functions, including the functions of the various embodiments described herein. In some mobile devices, multiple processors 1501, 1601, 1701 may be provided, such as one processor dedicated to communication functions and one processor dedicated to running other applications. Typically, software applications may be stored in the internal memory 1502, 1602, 1702 before they are accessed and loaded into the processor 1501, 1601, 1701. In some mobile devices, the processor 1501 may include internal memory sufficient to store the application software instructions. In some computing devices, the memory may be in a separate memory chip coupled to the processor 1501, 1601, 1701. In many computing devices 118, 206, the internal memory 1502 may be a volatile or nonvolatile memory, such as flash memory, or a mixture of both. For the purposes of this description, a general reference to memory refers to all memory accessible by the processor 1501, 1601, 1701, including internal memory 1502, 1602, 1702, removable memory plugged into the computing device, and memory within the processor 1501, 1601, 1701 itself.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary aspects, the functions described may be implemented in hardware, software, firmware, or any combination thereof. If implemented in software, the functions may be stored on or transmitted over as one or more instructions or code on a computer-readable medium. The steps of a method or algorithm disclosed herein may be embodied in a processor-executable software module executed which may reside on a computer-readable medium. Computer-readable media includes both computer storage media and communication media including any medium that facilitates transfer of a computer program from one place to another. A storage media may be any available media that may be accessed by a computer. By way of example, and not limitation, such computer-readable media may comprise RAM, ROM, EEPROM, CD-ROM or other optical disk storage, magnetic disk storage or other magnetic storage devices, or any other medium that may be used to carry or store desired program code in the form of instructions or data structures and that may be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a machine readable medium and/or computer-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the following claims and the principles and novel features disclosed herein.

## Claims

1. A method for facilitating merchandise transactions, comprising:
receiving, at a server (112), a product query message from a computing device (118,204,206), the product query message including image selection information regarding a selected portion of an image of broadcast content, and annotation information wherein the annotation information comprises information relating to a product object of interest within the selected portion of the image;
processing the image selection information to identify multiple product objects within the selected portion of the image;
analyzing the multiple product objects using the annotation information in order to select the product object of interest;
comparing the product object to a merchandise database to determine whether the product object corresponds to an available product;
generating a product information message based upon whether the product object matches or corresponds to an available product; and
transmitting the product information message to the computing device (118,204,206).

2. The method of claim 1, wherein when it is determined that the object matches or corresponds to an available product generating the product information message comprises:
obtaining information regarding the available product; and
generating the product information message including the obtained information regarding the available product.

3. The method of claim 1, wherein when it is determined that the object does not match or correspond to an available product generating the Product Information message comprises:
identifying an alternative available product;
obtaining information regarding the identified alternative available product; and
generating the product information message including the obtained information regarding the available product.

4. The method of claim 2, further comprising:
identifying an additional available product that may be of interest to a user; and
obtaining information regarding the additional available product; and
generating the product information message including the obtained information regarding the alternative available product.

5. The method of claim 1, wherein the image selection information concerns an image provided by a content delivery system selected from the group of a mobile broadcast television network, a cable television network, a satellite television network, an Internet, and a video storage medium.

6. The method of claim 1, wherein:
the Image selection information comprises image data; and
processing the image selection information comprises processing the image data to identify an image object within the portion of the broadcast video

7. The method of claim 6, further comprising:
comparing the identified image object to known products to identify the product object.

8. The method of claim 6, further comprising:
comparing the identified image object to images in the merchandise database to identify the product object.

9. The method of claim 6, further comprising:
comparing the identified image object to images of products known to have been placed in the broadcast video.

10. The method of claim 1, wherein:
the image selection information comprises a video frame identifier and a location within the frame, and
processing the image selection information to identify a product object within the selected portion of the image comprises:
using the video frame identifier and a location within the frame to obtain the selected portion of the image from a database; and
processing the obtained selected portion of the image to identify an image object within the selected portion of the image.

11. The method of claim 1, wherein:
the information regarding a portion of a broadcast video comprises image data; and
processing the Image Selection Information comprises:
forwarding the image data to a service that recognizes images; and
receiving an object description from the service.

12. The method of claim 1, further comprising:
receiving a transaction request message from the computing device in response to the product information message; and
facilitating a transaction in response to the transaction request message.

13. A server (112), comprising:
a processor;
memory coupled to the processor; and
a network access port (302) coupled to the processor and configured to communicate with a network,
wherein the processor is configured with processor-executable instructions to perform steps comprising:
receiving a product query message from a computing device (118,204,206) via the network, the product query message including image selection information regarding a selected portion of an image of broadcast content, and annotation information, wherein the annotation information comprises information relating to a product object of interest within the selected portion of the image;
in response to receiving the product query message from the computing device (118,204,206) via the network, processing the image selection information of the product query message to identify multiple product objects within the image data of the selected portion of the image;
analyzing the multiple product objects using the annotation information in order to select a product object of interest;
comparing the product object to a merchandise database to determine whether the product object corresponds to an available product;
generating a product information message based upon whether the product object matches or corresponds to an available product; and
transmitting the product information message to the computing device via the network.

## Patentansprüche

1. Ein Verfahren zum Ermöglichen von Handelstransaktionen, das Folgendes aufweist:
Empfangen, an einem Server (112), einer Produktanfragenachricht von einer Rechnereinrichtung (118, 204, 206), wobei die Produktanfragenachricht Bildauswahlinformation bezüglich eines ausgewählten Teils eines Bildes von Broadcast-Inhalts aufweist, und Anmerkungsinformation, wobei die Anmerkungsinformation Information bezüglich eines Produktobjekts, das von Interesse ist, das innerhalb des ausgewählten Teils des Bildes ist, aufweist;
Verarbeiten der Bildauswahlinformation zum Identifizieren mehrerer Produktobjekte innerhalb des ausgewählten Teils des Bildes;
Analysieren der mehreren Produktobjekte unter Verwendung der Anmerkungsinformation, um das ausgewählte Produktobjekt, das von Interesse ist, auszuwählen;
Vergleichen des Produktobjekts mit einer Handelsdatenbank zum Bestimmen, ob das Produktobjekt einem verfügbaren Produkt entspricht;
Generieren einer Produktinformationsnachricht basierend darauf, ob das Produktobjekt mit einem verfügbaren Produkt übereinstimmt oder diesem entspricht; und
Senden der Produktinformationsnachricht an die Rechnereinrichtung (118, 204, 206).

2. Verfahren nach Anspruch 1, wobei, wenn bestimmt wird, dass das Objekt mit einem verfügbaren Produkt übereinstimmt oder diesem entspricht, das Generieren der Produktinformationsnachricht Folgendes aufweist:
Erlangen von Information bezüglich des verfügbaren Produktes; und
Generieren der Produktinformationsnachricht, die die erlangte Information bezüglich des verfügbaren Produkts aufweist.

3. Verfahren nach Anspruch 1, wobei, wenn bestimmt wird, dass das Objekt nicht mit einem verfügbaren Produkt übereinstimmt oder diesem entspricht, das Generieren der Produktinformationsnachricht Folgendes aufweist:
Identifizieren eines alternativen verfügbaren Produkts;
Erlangen von Information bezüglich des identifizierten alternativen verfügbaren Produkts; und
Generieren der Produktinformationsnachricht einschließlich der erlangten Information bezüglich des verfügbaren Produkts.

4. Verfahren nach Anspruch 2, das weiter Folgendes aufweist:
Identifizieren eines zusätzlichen verfügbaren Produkts, das für einen Nutzer von Interesse sein könnte; und
Erlangen von Information bezüglich des zusätzlichen verfügbaren Produkts; und
Generieren der Produktinformationsnachricht, die die erlangte Information bezüglich des alternativen verfügbaren Produkts aufweist.

5. Verfahren nach Anspruch 1, wobei die Bildauswahlinformation ein Bild betrifft, das durch ein Inhaltsbereitstellungssystem bzw. Content-Delivery-System vorgesehen wird, das aus einer Gruppe aus einem Mobilfunk-Broadcast-Fernsehnetzwerk, einem Kabelfernsehnetzwerk, einem Satellitenfernsehnetzwerk, einem Internet und einem Videospeichermedium ausgewählt wird.

6. Verfahren nach Anspruch 1, wobei:
die Bildauswahlinformation Bilddaten aufweist; und
das Verarbeiten der Bildauswahlinformation Verarbeiten der Bilddaten zum Identifizieren eines Bildobjektes innerhalb des Teils des gebroadcasteten bzw. ausgestrahlten Videos aufweist.

7. Verfahren nach Anspruch 6, das weiter Folgendes aufweist:
Vergleichen des identifizierten Bildobjekts mit bekannten Produkten zum Identifizieren des Produktobjekts.

8. Verfahren nach Anspruch 6, das weiter Folgendes aufweist:
Vergleichen des identifizierten Bildobjektes mit Bildern in der Handelsdatenbank zum Identifizieren des Produktobjekts.

9. Verfahren nach Anspruch 6, das weiter Folgendes aufweist:
Vergleichen des identifizierten Bildobjekts mit Bildern von Produkten bezüglich denen bekannt ist, dass sie in dem gebroadcasteten bzw. ausgestrahlten Video platziert worden sind.

10. Verfahren nach Anspruch 1, wobei:
die Bildauswahlinformation einen Video-Frame- bzw. Videobildidentifikator und eine Position innerhalb des Frames bzw. Bildes aufweist, und
das Verarbeiten der Bildauswahlinformation zum Identifizieren eines Produktobjekts innerhalb des ausgewählten Teils des Bildes Folgendes aufweist:
Verwenden des Video-Frame-Identifikators und einer Position innerhalb des Frames zum Erlangen des ausgewählten Teils des Bildes von einer Datenbank; und
Verarbeiten des erlangten ausgewählten Teils des Bildes zum Identifizieren eines Bildobjektes innerhalb des ausgewählten Teils des Bildes.

11. Verfahren nach Anspruch 1, wobei:
die Information bezüglich eines Teils eines gebroadcasteten bzw. ausgestrahlten Videos Bilddaten aufweist; und
das Verarbeiten der Bildauswahlinformation Folgendes aufweist:
Weiterleiten der Bilddaten an einen Dienst, der Bilder erkennt; und
Empfangen einer Objektbeschreibung von dem Dienst.

12. Verfahren nach Anspruch 1, das weiter Folgendes aufweist:
Empfangen einer Transaktionsanfragenachricht von der Rechnereinrichtung ansprechend auf die Produktinformationsnachricht; und
Ermöglichen einer Transaktion ansprechend auf die Transaktionsanfragenachricht.

13. Ein Server (112), der Folgendes aufweist:
einen Prozessor;
Speicher, der an den Prozessor gekoppelt ist; und
einen Netzwerkzugriffs-Port (302), der an den Prozessor gekoppelt ist und konfiguriert ist zum Kommunizieren mit einem Netzwerk,
wobei der Prozessor konfiguriert ist mit von einem Prozessor ausführbaren Instruktionen zum Durchführen von Schritten, die Folgendes aufweisen:
Empfangen einer Produktanfragenachricht von einer Rechnereinrichtung (118, 204, 206) über das Netzwerk, wobei die Produktanfragenachricht Folgendes aufweist: Bildauswahlinformation bezüglich eines ausgewählten Teils eines Bildes von gebroadcastetem bzw. ausgestrahltem Inhalt,
und Anmerkungsinformation, wobei die Anmerkungsinformation Information bezüglich eines Produktobjekts, das von Interesse ist, innerhalb des ausgewählten Teils des Bildes aufweist;
ansprechend auf Empfangen der Produktanfragenachricht von der Rechnereinrichtung (118, 204, 206) über das Netzwerk, Verarbeiten der Bildauswahlinformation der Produktanfragenachricht zum Identifizieren mehrerer Produktobjekte innerhalb der Bilddaten des ausgewählten Teils des Bildes;
Analysieren der mehreren Produktobjekte unter Verwendung der Anmerkungsinformation zum Auswählen eines Produktobjektes, das von Interesse ist;
Vergleichen des Produktobjektes mit einer Handelsdatenbank zum Bestimmen, ob das Produktobjekt einem verfügbaren Produkt entspricht;
Generieren einer Produktinformationsnachricht basierend darauf, ob das Produktobjekt mit einem verfügbaren Produkt übereinstimmt oder diesem entspricht; und
Senden der Produktinformationsnachricht an die Rechnereinrichtung über das Netzwerk.

## Revendications

1. Procédé pour faciliter des transactions de marchandise, comprenant :
une réception, au niveau d'un serveur (112), d'un message de requête de produit à partir d'un dispositif de calcul (118, 204, 206), le message de requête de produit incluant des informations de sélection d'image concernant une portion sélectionnée d'une image de contenu de radiodiffusion, et des informations d'annotation dans lequel les informations d'annotation comprennent des informations concernant un objet de produit d'intérêt à l'intérieur de la portion sélectionnée de l'image ;
un traitement des informations de sélection d'image pour identifier de multiples objets de produit à l'intérieur de la portion sélectionnée de l'image ;
une analyse des multiples objets de produit en utilisant les informations d'annotation afin de sélectionner l'objet de produit d'intérêt ;
une comparaison de l'objet de produit à une base de données de marchandises pour déterminer si l'objet de produit correspond à un produit disponible ;
une génération d'un message d'informations de produit sur la base de si l'objet de produit coïncide ou correspond à un produit disponible ; et
une transmission du message d'informations de produit au dispositif de calcul (118, 204, 206).

2. Procédé selon la revendication 1, dans lequel lorsqu'il est déterminé que l'objet coïncide ou correspond à un produit disponible une génération du message d'informations de produit comprend :
une obtention d'informations concernant le produit disponible ; et
une génération du message d'informations de produit incluant les informations obtenues concernant le produit disponible.

3. Procédé selon la revendication 1, dans lequel lorsqu'il est déterminé que l'objet ne coïncide par ou ne correspond pas à un produit disponible une génération du message d'informations de produit comprend :
une identification d'un produit disponible alternatif ;
une obtention d'informations concernant le produit disponible alternatif identifié ; et
une génération du message d'informations de produit incluant les informations obtenues concernant le produit disponible.

4. Procédé selon la revendication 2, comprenant en outre :
une identification d'un produit disponible supplémentaire qui peut être d'intérêt pour un utilisateur ; et
une obtention d'informations concernant le produit disponible supplémentaire ; et
une génération du message d'informations de produit incluant les informations obtenues concernant le produit disponible alternatif.

5. Procédé selon la revendication 1, dans lequel les informations de sélection d'image concernent une image fournie par un système de délivrance de contenu sélectionné parmi le groupe d'un réseau de télévision de radiodiffusion mobile, d'un réseau de télévision câblé, d'un réseau de télévision par satellite, d'Internet, et d'un support de stockage vidéo.

6. Procédé selon la revendication 1, dans lequel :
les informations de sélection d'image comprennent des données d'image ; et
un traitement des informations de sélection d'image comprend un traitement des données d'image pour identifier un objet d'image à l'intérieur de la portion de la vidéo de radiodiffusion.

7. Procédé selon la revendication 6, comprenant en outre :
une comparaison de l'objet d'image identifié à des produits connus pour identifier l'objet de produit.

8. Procédé selon la revendication 6, comprenant en outre :
une comparaison de l'objet d'image identifié à des images dans la base de données de marchandises pour identifier l'objet de produit.

9. Procédé selon la revendication 6, comprenant en outre :
une comparaison de l'objet d'image identifié à des images de produits connus comme ayant été placés dans la vidéo de radiodiffusion.

10. Procédé selon la revendication 1, dans lequel :
les informations de sélection d'image comprennent un identifiant de trame vidéo et un emplacement à l'intérieur de la trame, et
un traitement des informations de sélection d'image pour identifier un objet de produit à l'intérieur de la portion sélectionnée de l'image comprend :
une utilisation de l'identifiant de trame vidéo et d'un emplacement à l'intérieur de la trame pour obtenir la portion sélectionnée de l'image à partir d'une base de données ; et
un traitement de la portion sélectionnée obtenue de l'image pour identifier un objet d'image à l'intérieur de la portion sélectionnée de l'image.

11. Procédé selon la revendication 1, dans lequel :
les informations concernant une portion d'une vidéo de radiodiffusion comprennent des données d'image ; et
un traitement des informations de sélection d'image comprend :
un transfert des données d'image vers un service qui reconnaît des images ; et
une réception d'une description d'objet à partir du service.

12. Procédé selon la revendication 1, comprenant en outre :
une réception d'un message de requête de transaction à partir du dispositif de calcul en réponse au message d'informations de produit ; et
une facilitation d'une transaction en réponse au message de requête de transaction.

13. Serveur (112), comprenant :
un processeur ;
une mémoire couplée au processeur ; et
un port d'accès de réseau (302) couplé au processeur et configuré pour communiquer avec un réseau,
dans lequel le processeur est configuré avec des instructions exécutables par processeur pour réaliser des étapes comprenant :
une réception d'un message de requête de produit à partir d'un dispositif de calcul (118, 204, 206) via le réseau, le message de requête de produit incluant des informations de sélection d'image concernant une portion sélectionnée d'une image d'un contenu de radiodiffusion, et des informations d'annotation, dans lequel les informations d'annotation comprennent des informations concernant un objet de produit d'intérêt à l'intérieur de la portion sélectionnée de l'image ;
en réponse à une réception du message de requête de produit à partir du dispositif de calcul (118, 204, 206) via le réseau, un traitement des informations de sélection d'image du message de requête de produit pour identifier de multiples objets de produit à l'intérieur des données d'image de la portion sélectionnée de l'image ;
une analyse des multiples objets de produit en utilisant les informations d'annotation afin de sélectionner un objet de produit d'intérêt ;
une comparaison de l'objet de produit à une base de données de marchandises pour déterminer si l'objet de produit correspond à un produit disponible ;
une génération d'un message d'informations de produit sur la base de si l'objet de produit coïncide ou correspond à un produit disponible ; et
une transmission du message d'informations de produit au dispositif de calcul via le réseau.
